# EUROPEAN PATENT SPECIFICATION

(11) **EP 3 722 717 B1**
(45) Date of publication and mention of the grant of the patent: **22.12.2021**
(21) Application number: 20165573.5
(22) Date of filing: 25.03.2020
(51) Int. Cl.: F26B 3/16, F26B 17/14

(54) **HOPPER FOR THERMALLY CONDITIONING PLASTICS, PLANT INCLUDING SUCH A HOPPER AND METHOD OF USING SUCH A HOPPER**
HOPPER FÜR THERMISCHES KONDITIONIEREN VON KUNSTSTOFFE, ANLAGE EINSCHLIESSLICH EINES SOLCHEN HOPPERS UND VERFAHREN ZUR VERWENDUNG EINES SOLCHEN HOPPERS
TRÉMIE POUR LE CONDITIONNEMENT THERMIQUE DE MATIÈRES PLASTIQUES, INSTALLATION COMPRENANT UNE TELLE TRÉMIE ET PROCÉDÉ D'UTILISATION D'UNE TELLE TRÉMIE

(30) Priority: 08.04.2019 IT 201900005320
(43) Date of publication of application: 14.10.2020
(73) Proprietor: Piovan S.P.A., 30036 Santa Maria di Sala (VE) (IT)
(72) Inventor: BELLIO, Enrico, 31050 Ponzano V.to (TV) (IT); BORTOLOZZO, Marco, 30030 Salzano (VE) (IT); CAPPELLINI, Davide, 26029 Soncino (CR) (IT)
(74) Representative: Crugnola, Pietro

(56) References cited:
- EP-A1- 2 447 655
- US-A- 3 325 913
- US-A- 3 337 969
- US-A- 3 735 563
- US-A- 3 875 683
- US-A1- 2003 154 624
- US-A1- 2009 090 019
- US-B2- 8 914 990

## Description

The invention relates to a hopper for thermally conditioning plastics, a thermal conditioning plant including such a hopper and a thermal conditioning method using such a hopper.

More precisely, the invention relates to a dehumidifying and/or drying hopper for dehumidifying and/or drying, by a process fluid, plastics in granular and/or microgranular and/or powder and/or flake or similar form, a dehumidifying and/or drying plant including such a hopper, and a dehumidifying and/or drying method using such a hopper.

In this patent application reference will be made, for the sake of brevity, to a granular form of the plastics, i.e. to plastics in the form of granules. It remains understood that the plastics cited below can also be present in the form of microgranules and/or powder and/or flakes or the like.

Dehumidifying and/or drying plants for dehumidifying and/or drying plastics in granular and/or microgranular and/or powder and/or flake or similar form are known that are intended for supplying user machines, in particular machines for treating and transforming plastics, such as machines for extruding, and subsequently moulding such plastics by injection and/or blowing and/or compression.

Known plants generally comprise a generator of process fluid, typically air, and at least one dehumidifying and/or drying hopper, intended for containing the plastics in granular form and feeding the plastics to a respective user machine.

The process fluid generator, known also as a "dryer", dehumidifies heats and delivers a defined process fluid flowrate to the at least one dehumidifying and/or drying hopper to enable the latter to thermally conditioning the plastics before supplying the plastics to at least one user machine.

Dehumidifying and/or drying the plastics, i.e. removing water contained in hygroscopic granules, is necessary for preventing, in the subsequent process of transformation of the granules, the water molecules remained inside the granules from degrading the granules, compromising the mechanical, aesthetic etc features of the end product.

In use, the process fluid delivered to the at least one dehumidifying and/or drying hopper pass through the mass of granules to be conditioned thermally, removes the humidity contained therein and exits the hopper to be again in turn conditioned thermally i.e. dehumidified and/or dried.

An achievable degree of dehumidifying and/or drying for the plastics depends, *inter alia,* on the dwell time of the plastics inside the hopper, on the process fluid flowrate in the hopper, on the geometry of the hopper, on the arrangement of the plastics inside the hopper, on the geometry/type of the plastics (granules, flakes, raw material, reground material, regenerated material), etc.

It is then particularly important to obtain and maintain a uniform temperature in the granules dwelling in the dehumidifying and/or drying hopper, in particular in the granules positioned at the same cross section as i.e. "at the same height" in the dehumidifying and/or drying hopper. In fact, if the granules had different temperatures in a radial direction, different degrees of dehumidifying and/or drying would be obtained in the granules that would be such as to be able to compromise the features of the finished product.

Also, it is of significant importance for the dwell time of the granules in the hopper to be almost the same. A different dwell time in fact results in different degrees of humidity in the granules. In order to ensure that the dwell time of the granules in the hopper is almost the same, it is particularly important for the flow of the granules during the descent into the hopper to be of the "mass flow" and not of the "funnel flow" type. A flow of material of the "mass flow" type is in fact characterized by the fact of there being a uniform descent of the granules inside the dehumidifying and/or drying hopper, i.e. without forming preferential descent channels. On the other hand, a flow of material of the "funnel flow" type results in a non-uniform descent of the granules inside the dehumidifying and/or drying hopper, inasmuch as the granules present in a central portion of the dehumidifying and/or drying hopper will have a greater descent speed than that of the granules present near the walls of the dehumidifying and/or drying hopper, this making a preferential descent channel of the granules in the central part of the dehumidifying and/or drying hopper. It is thus of maximum importance to obtain a granule flow of "mass flow" type during the step of descent into the dehumidifying and/or drying hopper.

Dehumidifying and/or drying hoppers are known that are provided internally with a process fluid diffusing device, in flowing communication with the process fluid generator, consisting of a cylindrical hollow insert ending with a drilled conical wall, with the apex facing a discharge opening of the hopper, through which the process fluid is delivered into the hoppers. These hoppers enable a substantially uniform descent of the granules to be obtained, i.e. a flow of "mass flow" type to be achieved, this making the dwell time of the granules in the hopper substantially the same. Nevertheless, in these hoppers the process fluid has to traverse the entire hollow insert, of significant section, this reducing, for the same volumetric process fluid flowrate, a kinetic energy possessed by the flow of process fluid. The flow of process fluid thus does not have sufficient energy to be distributed uniformly in a tapered lower portion of the hopper, which may generate an undesired thermal gradient in the granules that are located at the same cross section as, i.e. "at the same height" in the, dehumidifying and/or drying hopper, and involve non uniform dehumidifying levels of the granules, this compromising the features of the finished product. A further drawback that affects this type of hoppers lies in the constructional aspect of the drilled conical portion. In fact, the drilled cylindrical portion is made by calendering or moulding and subsequent folding, which can cause stretching, i.e. deformation, of the holes that is such as to permit the granules to enter the cylindrical hollow insert and compromise the ability to control the diffusion of the process fluid.

Also, dehumidifying and/or drying hoppers are known that are provided internally with a diffusing device positioned at an upper part of the tapered lower portion of the hoppers. This diffusing device consists of a hollow conical insert with the apex facing upwards and the inside of which is in flowing communication with the process fluid generator. In use, the process fluid exits the conical insert and rises up the hopper, traversing the granules. Nevertheless, in these hoppers poor dehumidifying and/or drying is obtained because the granules have a different dwell time in the hopper. In fact, near the conical insert the granules have different descent speeds, with the descent of the granules present in a zone above the conical insert being slowed.

Dehumidifying and/or drying hoppers are also known that are provided inside with a diffusing device, in flowing communication with the process fluid generator, consisting of a hollow insert with double conicity, i.e. having a first conical portion with a diameter increasing moving away from a discharge opening of the granule from the hopper and consisting of a second conical portion with a diameter decreasing moving away from the discharge opening, the first tapered portion being bounded by a drilled wall through which the process fluid is delivered into the hoppers. Similarly to the first type of dehumidifying and/or drying hopper disclosed, one drawback that besets also this type of hopper consists of the constructional appearance of the drilled wall, which, as it has been made by calendering or moulding and subsequent folding, may have stretched i.e. deformed holes so as to enable the granules to enter the cylindrical hollow insert and compromise the ability to control the diffusion of the process fluid.

Another drawback that is common to all the dehumidifying and/or drying hoppers disclosed above relates to the presence of possible mixtures of granules inside the hoppers themselves. In fact, owing to the different apparent density and/or the different geometric shape and/or dimensions of the mixtures of granules inside the hoppers, during the loading step and the subsequent discharge step, segregations or gaps may be created that near a dispensing zone for dispensing process fluid, for example at the aforesaid drilled walls, of the diffusing device cause a different load loss and thus a different diffusion of the process fluid through the granules, because the process fluid, by its nature, always tends to follow paths where there is less resistance to advancement.

Still another drawback that is common to all the dehumidifying and/or drying hoppers disclosed above relates to the continuous variation, in use, of process fluid flowrate in the drying and/or dehumidifying hopper that is necessary for optimizing to the real moulding conditions in order to save energy, a process fluid/material ratio (indicated by a factor K) in order to avoid phenomena of thermal degradation or thermal oxidation of the granules. This continuous variation of process fluid flowrate results in a different load loss in contact zones between the diffusing device and the granule, causing a different distribution of the flow of process fluid inside the hopper.

US 3 325 913 A discloses a hopper according to the preamble of claim 1.

An object of the present invention is to provide a hopper for thermally conditioning plastics that is associable with a thermal conditioning plant and usable in a thermal conditioning method that is free of the drawbacks disclosed above.

This and still other objects are achieved by a hopper for thermally conditioning plastics as disclosed in one or more of the claims set out below.

The invention can be better understood and implemented with reference to the attached drawings that illustrate some embodiments thereof by way of non-limiting example, in which:
Figure 1 is a cross section of a first embodiment of a hopper according to the invention;
Figure 2 is an enlarged detail of Figure 1;
Figure 3 is a cross section of a second embodiment of a hopper according to the invention;
Figure 4 is an enlarged detail of Figure 3;
Figure 5 is a cross section of a third embodiment of a hopper according to the invention; and
Figure 6 is an enlarged detail of Figure 5.

Structurally and/or functionally similar elements present in the embodiments disclosed below will be identified by the same reference marks.

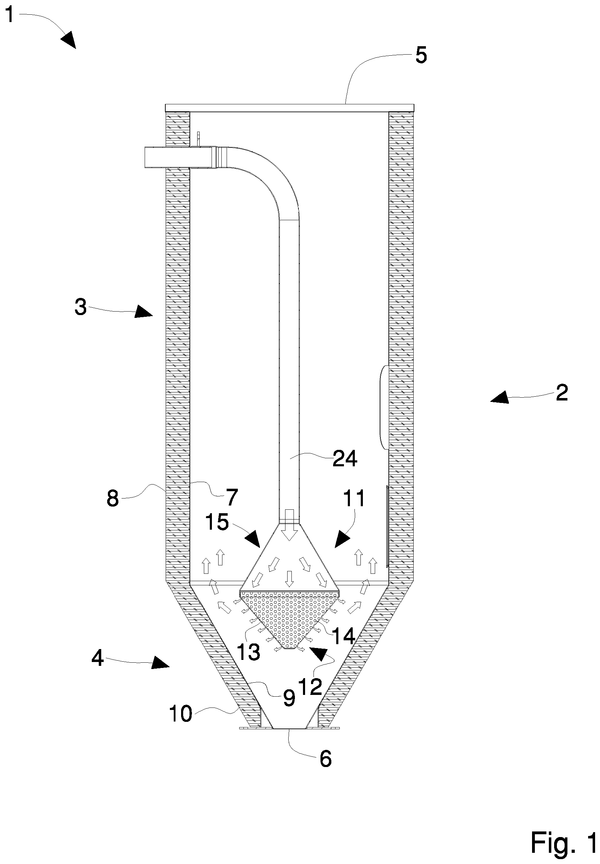

Also, in Figures 1 to 6 the arrows indicate schematically a path of the process fluid in the hopper according to the invention.

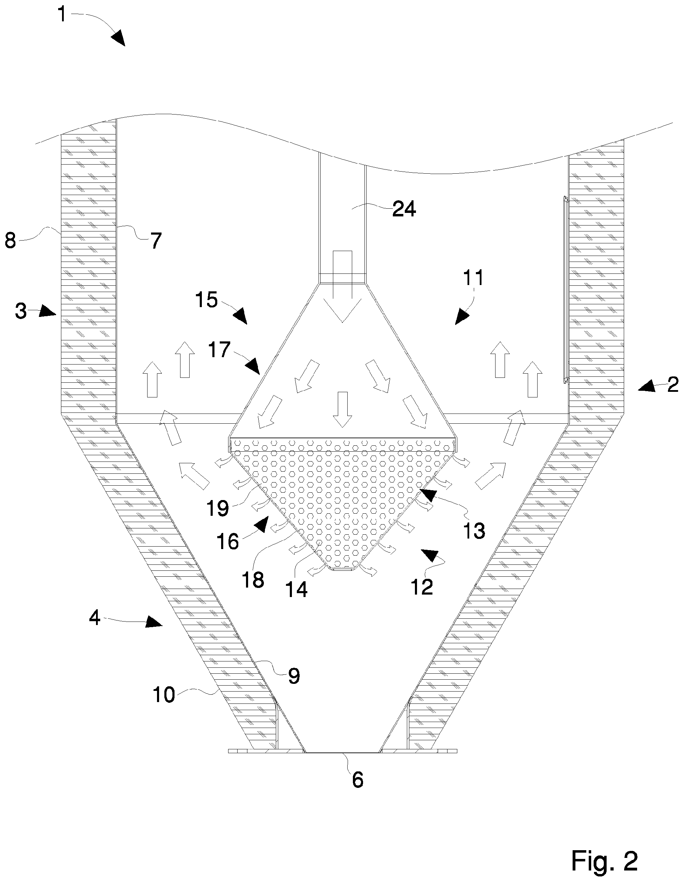

With reference to Figures 1 and 2, a first embodiment is shown of a hopper 1 for thermally conditioning plastics according to the present invention. More precisely, the hopper 1 is a dehumidifying and/or drying hopper for dehumidifying and/or drying, by a process fluid, typically air, plastics in granular and/or microgranular and/or powder and/or flake or similar form.

The hopper 1 includes a containing body 2 to contain the granules of plastics to be conditioned thermally. The containing body 2 comprises a preferably cylindrical main portion 3, in particular with a circular or square or rectangular section, and a tapered lower portion 4, preferably in the shape of an upturned cone. The main portion 3 is closed, at a free end thereof opposite the tapered lower portion 4, by a closing wall 5. The closing wall 5 is provided with a loading opening, which is not shown, to load inside the hopper 1 the plastics to be conditioned thermally, and with one or more discharge ports, which are not shown, to discharge outside the hopper 1 the process fluid loaded with humidity. Also, the tapered lower portion 4 is in turn provided with a discharge opening 6 for discharging from the hopper 1 the granule conditioned thermally by the process fluid.

Preferably, the main portion 3 is formed by a main portion inner wall 7 and by a main portion outer wall 8, the main portion outer wall 8 reproducing the shape of the main portion inner wall 7, and similarly the lower portion 4 is formed by a lower portion inner wall 9, connected to the main portion inner wall 7, and by a lower portion outer wall 10 connected to the main portion outer wall 8, the lower portion outer wall 9 reproducing the shape of the main portion inner wall 10; the main portion outer wall 8 and the main portion inner wall 7 and the first lower portion outer wall 9 and the lower portion inner wall 7 bounding together a gap configured to house a thermoinsulating material, for example glass fibre, to reduce the loss of heat from the hopper 1 to the outside environment.

Also, the hopper 1 comprises process fluid diffusing means 11, positioned inside the containing body 2 near the tapered lower portion 4 of the containing body 2, provided with drilled wall means 12 in flowing communication with the containing body 2 to diffuse the process fluid inside the containing body 2. In particular, the process fluid diffusing means 11 comprises process fluid supplying chamber means 13 bounded externally by the drilled wall means 12.

Also, the process fluid diffusing means 11 comprises loose material 14 for filling, at least partially, the supplying chamber means 13. The presence of the loose material 14 inside the supplying chamber means 13, which acts as a process fluid manifold, enables a plurality of diffusion channels for process fluid to be created that prevent the creation of preferential passages for the process fluid (which preferential channels would drastically reduce both dehumidification capacity and thermal transfer capacity) and at the same time mix the process fluid, this increasing the thermal transfer, the even distribution of the process fluid and stabilizing the flow of process fluid. Also, owing to the presence of the loose material 14 in the supplying chamber means 13 the limit of the constructional aspect disclosed above of known hoppers is substantially eliminated because the loose material 14 enables the stretched or deformed drilled holes to be occluded at least partially, thereby preventing the entry of the granules into the process fluid diffusing means 11. Also, the loose material 14 present in the supplying chamber means 13 enables the risk to be prevented or at least limited that the process fluid diffusing means 11 is conditioned by the nature of the mixture of the granules.

In particular, the loose material 14 is in granular form.

More in particular, the loose material 14 comprises a plurality of elements having a granulometry that is substantially the same or different. For example, these elements have a granulometry comprised between 5 and 20mm, in particular comprised between 10 and 16mm. It should be noted that the use of loose material 14 of different granulometry enables the distribution of process fluid to be modified, increases the diffusion effect of the process fluid, reduces the load loss induced by filling and improves the empty to full ratio so as to optimize the weight of the filled zone.

Still more in particular, the loose material 14 has a substantially spherical shape.

Also, the loose material 14 is made of a resistant material, i.e. does not melt, at a temperature of approximately 200°C, for example it is made of at least one of the following materials: glass, metal, ceramics.

According to the first embodiment shown in greater detail in Figure 2, the process fluid diffusing means 11 comprises a first diffuser formed by a hollow insert 15 with double conicity, provided with a first tapered, in particular conical, portion 16, with a diameter increasing moving away from the discharge opening 6 and with a second tapered, in particular conical, portion 17, connected to the first portion 16, with a diameter decreasing moving away from the discharge opening 6. In the first embodiment the first portion 16 is bounded by a first drilled wall 18 of said drilled wall means 12, the first drilled wall 18 defining a first, substantially frustoconical, supplying chamber 19, of the process fluid supplying chamber means 13. Also, in the first embodiment, the first portion 16 is substantially positioned at the tapered lower portion 4 of the containing body 2.

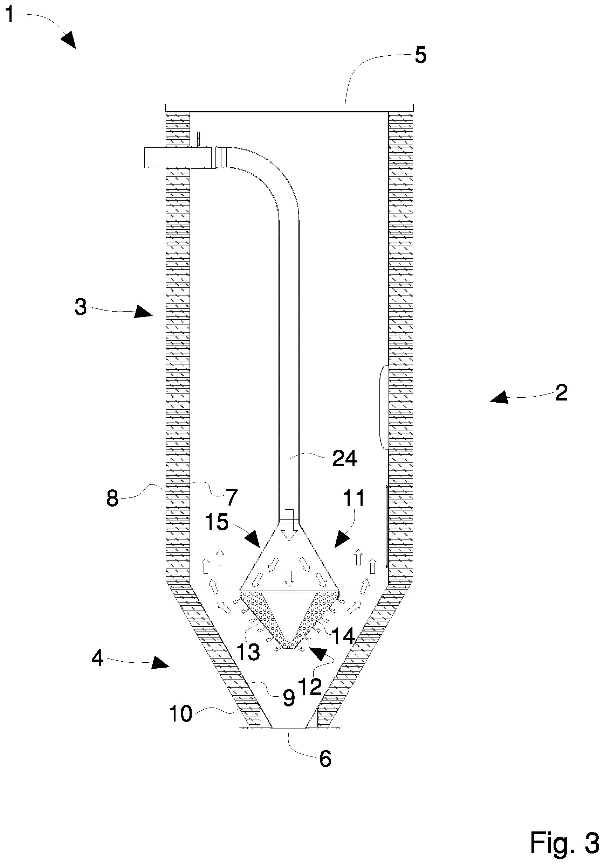

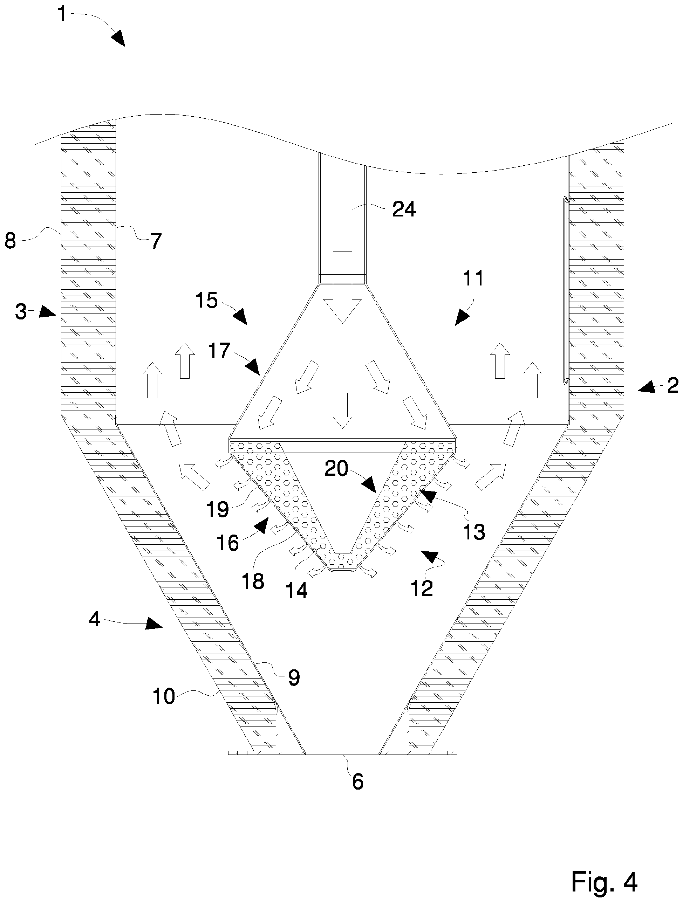

With reference to Figures 3 and 4, a second embodiment is shown of the hopper 1 according to the invention.

The hopper 1 according to the second embodiment differs from the hopper according to the first embodiment by the fact that the hollow insert 15 further comprises a third, in particular conical, tapered portion 20, having a diameter increasing moving away from the discharge opening 6. In particular, the third portion 20 has a conicity less than the conicity of the first portion 16 and is housed in the first portion 16 so as to give a substantially annular shape to the first supplying chamber 19, intended to be filled also here, at least partially, with the loose material 14 disclosed above. According to the second embodiment of the hopper 1, the first supplying chamber 19 has an annular shape with increasing conicity moving away from the discharge opening 6 and with increasing thickness, for example linearly, moving away from the discharge opening 6. This configuration is particularly advantageous in the presence of hoppers with greater load losses at the first portion 16, where a variation in the thickness of the first supplying chamber 19 enables the load losses of the process fluid to be reduced and the exit speed of the process fluid to be made uniform.

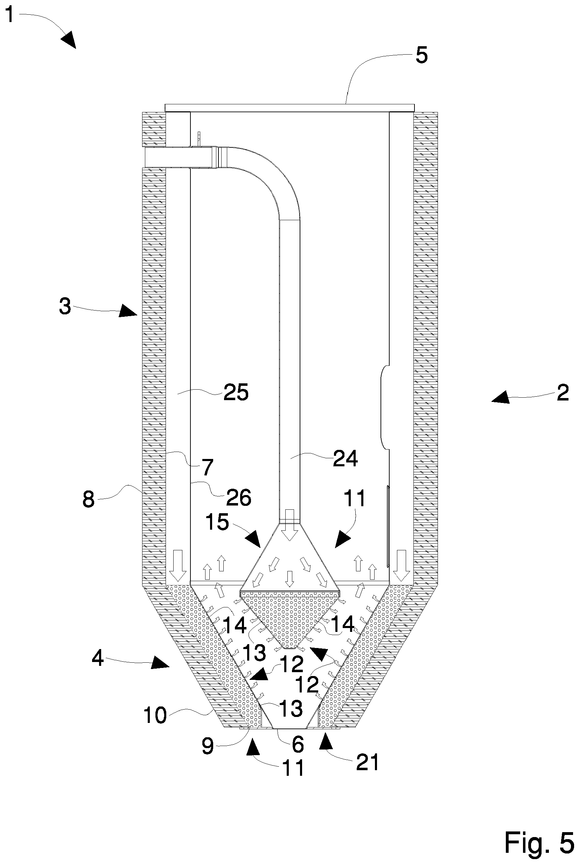

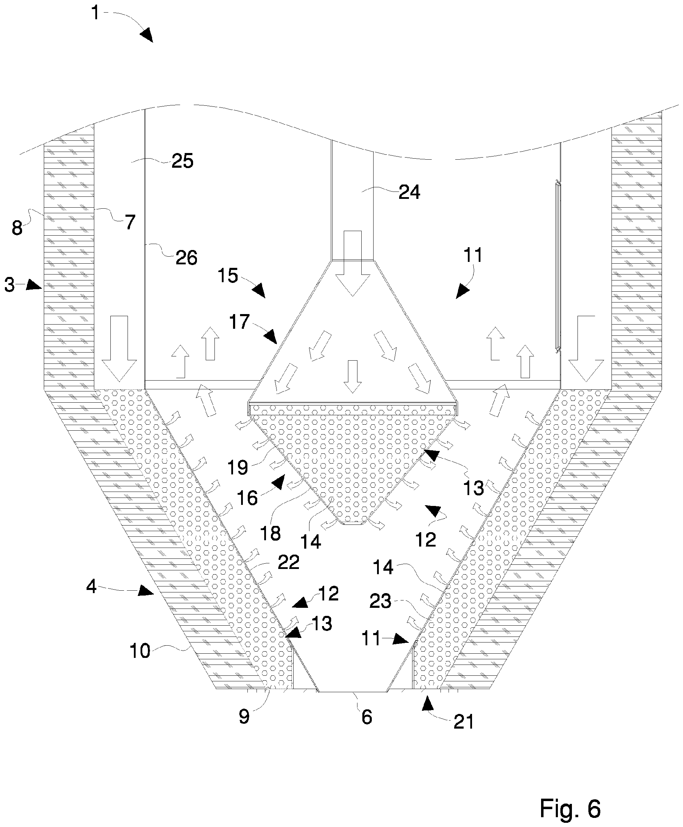

With reference to Figures 5 and 6, a third embodiment is shown of the hopper 1 according to the invention.

The hopper 1 according to the third embodiment differs from the hopper according to the first embodiment by the fact that in addition to the first diffuser, the process fluid diffusing means 11 comprises a second diffuser 21 comprising a second drilled wall 22 of the drilled wall means 12 and at least one portion of the lower portion inner wall 9, the at least one portion of the lower portion inner wall 9 enveloping at least partially the second drilled wall 22 so as to bound therewith a second supplying chamber 23 of the supplying chamber means 13 intended to be filled, at least partially, with the loose material 14 disclosed above.

In particular, the second supplying chamber 23 has a substantially annular shape, more precisely it has an annular shape with increasing conicity moving away from the discharge opening 6. This configuration with a first and second diffuser enables a thermal gradient to be obtained with a substantially symmetric profile along a descent path of the granule. Also, as is demonstrable by laboratory tests, having disposable process fluid conveyed by substantially concentric drilled walls 18, 22 enables a uniform thermal profile to be obtained in a normal direction at the two walls 18, 22, because the two walls 18, 22 are at substantially the same temperature, and the so-called "wall effect" to be reduced and/or eliminated, i.e. the effect linked to the thermal gradient that is generated because of the thermal dispersion of a fluid that penetrates the thickness of a porous baffle.

A fourth embodiment of the invention, which is not shown, provides a hopper provided with a first diffuser as disclosed in the second embodiment and with the second diffuser as disclosed in the third embodiment.

A fifth embodiment of the invention, which is not shown, provides for a hopper provided only with the second diffuser as disclosed in the third embodiment.

Also, the hopper 1 according to the embodiments disclosed above comprises supplying conduit means 24, 25 for supplying the process fluid to the process fluid diffusing means 11. In particular, the supplying conduit means comprises an axial supplying conduit 24 for supplying the first diffuser, and where the second diffuser 21 is present, an annular supplying conduit 25 for supplying the second diffuser 21. The annular supplying conduit 25 is defined between a more inner main portion wall 26 enveloped externally by the main portion inner wall 7.

It should be noted how the invention disclosed above is easily implementable also in already existing plants.

Also, the hopper 1 according to the invention can be used in a plant, which is not shown, for thermally conditioning, in particular for dehumidifying and/or drying by a process fluid, plastics in granular and/or microgranular and/or powder and/or flake or similar form. This plant can be intended to supply one or more user machines, which are not shown, in particular machines for treating and transforming plastics, such as machines for extruding, and subsequently moulding by injection and/or blowing and/or compression such plastics. Also, this plant can comprise a process fluid generator configured to generate a flow of process fluid and supply the process fluid to the process fluid diffusing means 11 via the supplying conduit means.

Also with the hopper 1 according to the invention, a method can be achieved for thermally conditioning, in particular for dehumidifying and/or drying, by a process fluid plastics in granular and/or microgranular and/or powder and/or flake or similar form, this method comprising using at least one hopper 1 according to the invention so as to homogenize and stabilize a flow of process fluid exiting the supplying chamber means 13.

The invention that is thus conceived is susceptible to numerous modifications and variations, all of which fall within the scope of the inventive concept. Further, all the details can be replaced by technically equivalent elements.

## Claims

1. Hopper (1) for thermally conditioning by a process fluid plastics in granular and/or microgranular and/or powder and/or flake or similar form, said hopper (1) comprising:
- a containing body (2) for containing said plastics to be thermally conditioned; and
- process fluid diffusing means (11), positioned inside said containing body (2), and comprising drilled wall means (12) in flowing communication with said containing body (2) to diffuse said process fluid inside said containing body (2);
- wherein said process fluid diffusing means (11) comprises process fluid supplying chamber means (13) bounded by said drilled wall means (12);
said hopper (1) **being *characterized in that*** said process fluid diffusing means (11)
comprises loose material (14) for filling, at least partially, said supplying chamber means (13) so as to form in said supplying chamber means (13) a plurality of passages for said process fluid so as to homogenize and stabilize a flow of said process fluid exiting said supplying chamber means (13).

2. Hopper (1) according to claim 1, wherein said loose material (14) is in granular form.

3. Hopper (1) according to claim 1, or 2, wherein said loose material (14) has a substantially spherical shape.

4. Hopper (1) according to one of claims 1 to 3, wherein said loose material (14) comprises elements having substantially the same, or different granulometry.

5. Hopper (1) according to one of claims 1 to 4, wherein said loose material (14) comprises elements having a granulometry comprised between 5 and 20mm, in particular comprised between 10 and 16mm.

6. Hopper (1) according to one of claims 1 to 5, wherein said loose material (14) is made of a material that does not melt at a temperature of about 200°C.

7. Hopper (1) according to one of claims 1 to 6, wherein said loose material (14) is made of at least one of the following materials: glass, metal, ceramics.

8. Hopper (1) according to one of claims 1 to 7, in which said process fluid diffusing means (11) is positioned near a tapered lower portion (4) of said containing body (2), said tapered lower portion (4) being provided with a discharge opening (6) for discharging said plastics thermally conditioned by said process fluid.

9. Hopper (1) according to one of claims 1 to 8, in which said process fluid diffusing means (11) comprises a first diffuser formed by a double-conicity hollow insert (15), provided with a first tapered, in particular conical, portion (16), with a diameter increasing moving away from a discharge opening (6) for discharging plastics of said containing body (2) and with a second tapered, in particular conical, portion (17), with a diameter decreasing moving away from said discharge opening (6), said first portion (16) being bounded by a first drilled wall (18) of said drilled wall means (12) and defining a first supplying chamber (19) of said process fluid supplying chamber means (13).

10. Hopper (1) according to claim 8, as claim 8 is dependent on claim 7, wherein said first portion (16) is positioned substantially at said tapered lower portion (4) of said containing body (2).

11. Hopper (1) according to claim 9, or 10, wherein said first diffuser further comprises a third tapered, in particular conical, portion (20), with a diameter increasing moving away from said discharge opening (6), wherein said third portion (20) has less conicity than said first portion (16) and is housed in said first portion (16) so as to give a substantially annular shape to said first supplying chamber (19).

12. Hopper (1) according to claim 11, wherein said first supplying chamber (19) has an annular shape with a conicity increasing moving away from a discharge opening (6) for discharging plastics of said containing body (2).

13. Hopper (1) according to claim 11, wherein said first supplying chamber (19) has an annular shape with a thickness increasing moving away from a discharge opening (6) for discharging plastics of said containing body (2).

14. Hopper (1) according to one of claims 1 to 13, wherein said process fluid diffusing means (11) comprises a second diffuser (21) comprising a second drilled wall (22) of said drilled wall means (12) and at least one portion of a wall (9) of a tapered lower portion (4) of said containing body (2) enveloping at least partially said second drilled wall (22) so as to bound therewith a second supplying chamber (23) of said process fluid supplying chamber means (13).

15. Hopper (1) according to claim 14, wherein said second supplying chamber (23) has a substantially annular shape, in particular has an annular shape with a conicity increasing moving away from a discharge opening (6) for discharging plastics of said containing body (2).

16. Hopper (1) according to one of claims 1 to 15, and comprising supplying conduit means (24, 25) for supplying said process fluid to said process fluid diffusing means (11).

17. Hopper (1) according to claim 16, wherein said supplying conduit means comprises an axial supplying conduit (24) and/or an annular supplying conduit (25).

18. Plant for thermally conditioning, in particular for dehumidifying and/or drying, by a process fluid, plastics in granular and/or microgranular and/or powder and/or flake or similar form, said plant comprising at least one hopper (1) according to one of claims 1 to 17.

19. Method for thermally conditioning, in particular for dehumidifying and/or drying, by a process fluid, plastics in granular and/or microgranular and/or powder and/or flake or similar form, said method comprising using at least one hopper (1) according to one of claims 1 to 17 so as to form in said supplying chamber means (13) a plurality of passages for said process fluid so as to homogenize and stabilize a flow of said process fluid exiting said supplying chamber means (13).

## Patentansprüche

1. Trichter (1) zum thermischen Aufbereiten von Kunststoff in granularer und/oder mikrogranularer und/oder Pulver- und/oder Flocken- oder ähnlicher Form durch ein Prozessfluid, wobei der Trichter (1) umfasst.
- einen Aufnahmekörper (2) zum Aufnehmen des thermisch aufzubereitenden Kunststoffs; und
- ein Prozessfluiddiffusionsmittel (11), das innerhalb des Aufnahmekörpers (2) angeordnet ist und ein durchbohrtes Wandmittel (12) in Strömungsverbindung mit dem Aufnahmekörper (2) umfasst, um das Prozessfluid innerhalb des Aufnahmekörpers (2) zu diffundieren;
- wobei das Prozessfluiddiffusionsmittel (11) ein Prozessfluidzufuhrkammermittel (13) umfasst, das durch das durchbohrte Wandmittel (12) begrenzt ist;
wobei der Trichter (1) **dadurch gekennzeichnet, dass** das Prozessfluiddiffusionsmittel (11)
ein loses Material (14) zum zumindest teilweisen Füllen des Zufuhrkammermittels (13) umfasst, um in dem Zufuhrkammermittel (13) eine Vielzahl von Durchgängen für das Prozessfluid zu bilden, um eine Strömung des Prozessfluids, das das Zufuhrkammermittel (13) verlässt, zu homogenisieren und zu stabilisieren.

2. Trichter (1) nach Anspruch 1, wobei das lose Material (14) in granularer Form vorliegt.

3. Trichter (1) nach Anspruch 1 oder 2, wobei das lose Material (14) eine im Wesentlichen sphärische Form aufweist.

4. Trichter (1) nach einem der Ansprüche 1 bis 3, wobei das lose Material (14) Elemente mit im Wesentlichen derselben oder einer unterschiedlichen Granulometrie umfasst.

5. Trichter (1) nach einem der Ansprüche 1 bis 4, wobei das lose Material (14) Elemente mit einer Granulometrie umfasst, die zwischen 5 und 20 mm liegt, insbesondere zwischen 10 und 16 mm liegt.

6. Trichter (1) nach einem der Ansprüche 1 bis 5, wobei das lose Material (14) aus einem Material besteht, das bei einer Temperatur von etwa 200 °C nicht schmilzt.

7. Trichter (1) nach einem der Ansprüche 1 bis 6, wobei das lose Material (14) aus mindestens einem der folgenden Materialien besteht: Glas, Metall, Keramik.

8. Trichter (1) nach einem der Ansprüche 1 bis 7, wobei das Prozessfluiddiffusionsmittel (11) nahe einem verjüngten unteren Abschnitt (4) des Aufnahmekörpers (2) positioniert ist, wobei der verjüngte untere Abschnitt (4) mit einer Auslassöffnung (6) zum Auslassen des durch das Prozessfluid thermisch aufbereiteten Kunststoffs versehen ist.

9. Trichter (1) nach einem der Ansprüche 1 bis 8, wobei das Prozessfluiddiffusionsmittel (11) einen ersten Diffusor umfasst, der durch einen hohlen Einsatz (15) mit doppelter Konizität gebildet ist, der mit einem ersten verjüngten, insbesondere konischen, Abschnitt (16) mit einem Durchmesser, der mit einer Wegbewegung von einer Auslassöffnung (6) zum Auslassen von Kunststoff des Aufnahmekörpers (2) zunimmt, und mit einem zweiten verjüngten, insbesondere konischen, Abschnitt (17) mit einem Durchmesser, der mit einer Wegbewegung von der Auslassöffnung (6) abnimmt, versehen ist, wobei der erste Abschnitt (16) durch eine erste durchbohrte Wand (18) des durchbohrten Wandmittels (12) begrenzt ist und eine erste Zufuhrkammer (19) des Prozessfluidzufuhrkammermittels (13) definiert.

10. Trichter (1) nach Anspruch 8, wenn Anspruch 8 von Anspruch 7 abhängt, wobei der erste Abschnitt (16) im Wesentlichen an dem verjüngten unteren Abschnitt (4) des Aufnahmekörpers (2) positioniert ist.

11. Trichter (1) nach Anspruch 9 oder 10, wobei der erste Diffusor ferner einen dritten verjüngten, insbesondere konischen, Abschnitt (20) mit einem Durchmesser umfasst, der mit einer Wegbewegung von der Auslassöffnung (6) zunimmt, wobei der dritte Abschnitt (20) weniger Konizität aufweist als der erste Abschnitt (16) und im ersten Abschnitt (16) untergebracht ist, um der ersten Zufuhrkammer (19) eine im Wesentlichen ringförmige Form zu geben.

12. Trichter (1) nach Anspruch 11, wobei die erste Zufuhrkammer (19) eine ringförmige Form mit einer Konizität aufweist, die mit einer Wegbewegung von einer Auslassöffnung (6) zum Auslassen von Kunststoff des Aufnahmekörpers (2) zunimmt.

13. Trichter (1) nach Anspruch 11, wobei die erste Zufuhrkammer (19) eine ringförmige Form mit einer Dicke aufweist, die mit einer Wegbewegung von der Auslassöffnung (6) zum Auslassen von Kunststoff des Aufnahmekörpers (2) zunimmt.

14. Trichter (1) nach einem der Ansprüche 1 bis 13, wobei das Prozessfluiddiffusionsmittel (11) einen zweiten Diffusor (21) mit einer zweiten durchbohrten Wand (22) des durchbohrten Wandmittels (12) und mindestens einem Abschnitt einer Wand (9) eines verjüngten unteren Abschnitts (4) des Aufnahmekörpers (2) umfasst, der zumindest teilweise die zweite durchbohrte Wand (22) umhüllt, um damit eine zweite Zufuhrkammer (23) des Prozessfluidzufuhrkammermittels (13) zu begrenzen.

15. Trichter (1) nach Anspruch 14, wobei die zweite Zufuhrkammer (23) eine im Wesentlichen ringförmige Form aufweist, insbesondere eine ringförmige Form mit einer Konizität aufweist, die mit einer Wegbewegung von einer Auslassöffnung (6) zum Auslassen von Kunststoff des Aufnahmekörpers (2) zunimmt.

16. Trichter (1) nach einem der Ansprüche 1 bis 15 und mit einem Zufuhrleitungsmittel (24, 25) zum Zuführen des Prozessfluids zum Prozessfluiddiffusionsmittel (11).

17. Trichter (1) nach Anspruch 16, wobei das Zufuhrleitungsmittel eine axiale Zufuhrleitung (24) und/oder eine ringförmige Zufuhrleitung (25) umfasst.

18. Anlage zum thermischen Aufbereiten, insbesondere zum Entfeuchten und/oder Trocknen, von Kunststoff in granularer und/oder mikrogranularer und/oder Pulver- und/oder Flocken- oder ähnlicher Form durch ein Prozessfluid, wobei die Anlage mindestens einen Trichter (1) nach einem der Ansprüche 1 bis 17 umfasst.

19. Verfahren zum thermischen Aufbereiten, insbesondere zum Entfeuchten und/oder Trocknen, von Kunststoff in granularer und/oder mikrogranularer und/oder Pulver- und/oder Flocken- oder ähnlicher Form durch ein Prozessfluid, wobei das Verfahren die Verwendung mindestens eines Trichters (1) nach einem der Ansprüche 1 bis 17 umfasst, um in dem Zufuhrkammermittel (13) eine Vielzahl von Durchgängen für das Prozessfluid zu bilden, um eine Strömung des Prozessfluids, das das Zufuhrkammermittel (13) verlässt, zu homogenisieren und zu stabilisieren.

## Revendications

1. Trémie (1) pour le conditionnement thermique, par un fluide de traitement, d'une matière plastique sous forme granulaire et/ou microgranulaire et/ou de poudre et/ou de paillettes ou similaire, ladite trémie (1) comprenant :
- un corps contenant (2) pour contenir ladite matière plastique à conditionner thermiquement ; et
- des moyens de diffusion de fluide de traitement (11), positionnés à l'intérieur dudit corps contenant (2), et comprenant des moyens de paroi percée (12) en communication d'écoulement avec ledit corps contenant (2) pour diffuser ledit fluide de traitement à l'intérieur dudit corps contenant (2) ;
- dans lequel lesdits moyens de diffusion de fluide de traitement (11) comprennent des moyens de chambre d'alimentation en fluide de traitement (13) délimités par lesdits moyens de paroi percée (12) ;
ladite trémie (1) étant ***caractérisée en ce que*** lesdits moyens de diffusion de fluide de traitement (11) comprennent un matériau en vrac (14) pour remplir, au moins partiellement, lesdits moyens de chambre d'alimentation (13) de manière à former dans lesdits moyens de chambre d'alimentation (13) une pluralité de passages pour ledit fluide de traitement de manière à homogénéiser et stabiliser un écoulement dudit fluide de traitement sortant desdits moyens de chambre d'alimentation (13).

2. Trémie (1) selon la revendication 1, dans laquelle ledit matériau en vrac (14) est sous forme granulaire.

3. Trémie (1) selon la revendication 1, ou 2, dans laquelle ledit matériau en vrac (14) a une forme sensiblement sphérique.

4. Trémie (1) selon l'une des revendications 1 à 3, dans laquelle ledit matériau en vrac (14) comprend des éléments ayant une granulométrie sensiblement identique, ou différente.

5. Trémie (1) selon l'une des revendications 1 à 4, dans laquelle ledit matériau en vrac (14) comprend des éléments ayant une granulométrie comprise entre 5 et 20 mm, en particulier comprise entre 10 et 16 mm.

6. Trémie (1) selon l'une des revendications 1 à 5, dans laquelle ledit matériau en vrac (14) est fait d'un matériau qui ne fond pas à une température d'environ 200°C.

7. Trémie (1) selon l'une des revendications 1 à 6, dans laquelle ledit matériau en vrac (14) est fait de l'un au moins des matériaux suivants : verre, métal, céramique.

8. Trémie (1) selon l'une des revendications 1 à 7, dans laquelle lesdits moyens de diffusion de fluide de traitement (11) sont positionnés près d'une partie inférieure effilée (4) dudit corps contenant (2), ladite partie inférieure effilée (4) étant pourvue d'une ouverture de décharge (6) pour décharger ladite matière plastique conditionnée thermiquement par ledit fluide de traitement.

9. Trémie (1) selon l'une des revendications 1 à 8, dans laquelle lesdits moyens de diffusion de fluide de traitement (11) comprennent un premier diffuseur formé par un insert creux à double conicité (15), pourvu d'une première partie effilée, en particulier conique, (16), d'un diamètre croissant en s'éloignant d'une ouverture de décharge (6) pour décharger la matière plastique dudit corps contenant (2) et d'une deuxième partie effilée, en particulier conique, (17), d'un diamètre décroissant en s'éloignant de ladite ouverture de décharge (6), ladite première partie (16) étant délimitée par une première paroi percée (18) desdits moyens de paroi percée (12) et définissant une première chambre d'alimentation (19) des moyens de chambre d'alimentation en fluide de traitement (13).

10. Trémie (1) selon la revendication 8, quand la revendication 8 est dépendante de la revendication 7, dans laquelle ladite première partie (16) est positionnée sensiblement à ladite partie inférieure effilée (4) dudit corps contenant (2).

11. Trémie (1) selon la revendication 9, ou 10, dans laquelle ledit premier diffuseur comprend en outre une troisième partie effilée, en particulier conique, (20), d'un diamètre croissant en s'éloignant de ladite ouverture de décharge (6), dans laquelle ladite troisième partie (20) a une conicité inférieure à ladite première partie (16) et est logée dans ladite première partie (16) de manière à donner une forme sensiblement annulaire à ladite première chambre d'alimentation (19).

12. Trémie (1) selon la revendication 11, dans laquelle ladite première chambre d'alimentation (19) a une forme annulaire avec une conicité croissante en s'éloignant d'une ouverture de décharge (6) pour décharger la matière plastique dudit corps contenant (2).

13. Trémie (1) selon la revendication 11, dans laquelle ladite première chambre d'alimentation (19) a une forme annulaire d'une épaisseur croissante en s'éloignant d'une ouverture de décharge (6) pour décharger la matière plastique dudit corps contenant (2).

14. Trémie (1) selon l'une des revendications 1 à 13, dans laquelle lesdits moyens de diffusion de fluide de traitement (11) comprennent un deuxième diffuseur (21) comprenant une deuxième paroi percée (22) desdits moyens de paroi percée (12) et au moins une partie d'une paroi (9) d'une partie inférieure effilée (4) dudit corps contenant (2) enveloppant au moins partiellement ladite deuxième paroi percée (22) de manière à délimiter avec elle une deuxième chambre d'alimentation (23) desdits moyens de chambre d'alimentation en fluide de traitement (13).

15. Trémie (1) selon la revendication 14, dans laquelle ladite deuxième chambre d'alimentation (23) a une forme sensiblement annulaire, en particulier une forme annulaire avec une conicité croissante en s'éloignant d'une ouverture de décharge (6) pour décharger la matière plastique dudit corps contenant (2).

16. Trémie (1) selon l'une des revendications 1 à 15, et comprenant des moyens de conduit d'alimentation (24, 25) pour alimenter lesdits moyens de diffusion de fluide de traitement (11) avec ledit fluide de traitement.

17. Trémie (1) selon la revendication 16, dans laquelle lesdits moyens de conduit d'alimentation comprennent un conduit d'alimentation axial (24) et/ou un conduit d'alimentation annulaire (25).

18. Installation pour le conditionnement thermique, en particulier pour la déshumidification et/ou le séchage, par un fluide de traitement, d'une matière plastique sous forme granulaire et/ou microgranulaire et/ou de poudre et/ou de paillettes ou similaire, ladite installation comprenant au moins une trémie (1) selon l'une des revendications 1 à 17.

19. Procédé pour le conditionnement thermique, en particulier pour la déshumidification et/ou le séchage, par un fluide de traitement, d'une matière plastique sous forme granulaire et/ou microgranulaire et/ou de poudre et/ou de paillettes ou similaire, ledit procédé comprenant l'utilisation d'au moins une trémie (1) selon l'une des revendications 1 à 17, de manière à former dans lesdits moyens de chambre d'alimentation (13) une pluralité de passages pour ledit fluide de traitement de manière à homogénéiser et stabiliser un écoulement dudit fluide de traitement sortant desdits moyens de chambre d'alimentation (13).
